# EUROPÄISCHE PATENTSCHRIFT

(11) **EP 1 560 645 B1**
(45) Veröffentlichungstag und Bekanntmachung des Hinweises auf die Patenterteilung: **05.12.2007**
(21) Anmeldenummer: 03769216.7
(22) Anmeldetag: 26.09.2003
(51) Int. Cl.: B01J 4/02

(54) **DOSIEREINRICHTUNG**
DOSING DEVICE
DISPOSITIF DE DOSAGE

(30) Priorität: 06.11.2002 DE 10251698
(43) Veröffentlichungstag der Anmeldung: 10.08.2005
(73) Patentinhaber: ROBERT BOSCH GMBH, 70442 Stuttgart (DE)
(72) Erfinder: FAYE, Ian, 70192 Stuttgart (DE); MILLER, Frank, 74360 Ilsfeld (DE)
(86) Internationale Anmeldenummer: PCT/DE2003/003213
(87) Internationale Veröffentlichungsnummer: WO 2004/041424

(56) Entgegenhaltungen:
- EP-A- 1 186 774
- WO-A-02/42635
- WO-A-02/059477
- PATENT ABSTRACTS OF JAPAN Bd. 1998, Nr. 10, 31. August 1998 (1998-08-31) & JP 10 141183 A (ISUZU MOTORS LTD), 26. Mai 1998 (1998-05-26)

## Beschreibung

### Stand der Technik

Die Erfindung geht aus von einer Dosiereinrichtung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen wie beispielsweise Benzin, Ethanol oder Methanol sog. chemische Reformer zum Einsatz.

Alle vom Reformer zum Reaktionsablauf benötigten Stoffe, wie z.B. Luft, Wasser und Kraftstoff, werden idealerweise dem Reaktionsbereich des Reformers in gasförmigem Zustand zugeführt. Da aber die Kraftstoffe, wie z.B. Methanol oder Benzin, und Wasser, an Bord des Transportsystems vorzugsweise in flüssiger Form vorliegen, müssen sie erst, kurz bevor sie zum Reaktionsbereich des Reformers gelangen, erhitzt werden, um sie zu verdampfen. Dies erfordert einen Vorverdampfer, eine separate Komponente oder eine Vormischkammer im Reformer, die in der Lage sind, die entsprechenden Mengen an gasförmigem Kraftstoff und Wasserdampf zur Verfügung zu stellen.

Die für die chemische Reaktion, in welcher beispielsweise der Kraftstoff unter anderem zu Wasserstoff reformiert wird, notwendige Temperatur wird durch sogenannte Katbrenner zur Verfügung gestellt. Katbrenner sind Komponenten, welche mit einem Katalysator beschichtete Flächen aufweisen. In diesen katalytischen Brennern wird das Kraftstoff/Luftgemisch in Wärme und Abgase gewandelt, wobei die entstehende Wärme beispielsweise über die Mantelflächen und/oder über den warmen Abgasstrom an die entsprechenden Komponenten, wie beispielsweise den chemischen Reformer oder einen Verdampfer, geführt wird.

Die Umsetzung des Kraftstoffs in Wärme ist stark von der Größe der Kraftstofftröpfchen, welche auf die katalytische Schicht auftreffen, abhängig. Je kleiner die Tröpfchengröße ist und je gleichmäßiger die katalytische Schicht mit den Kraftstofftröpfchen benetzt wird, desto vollständiger wird der Kraftstoff in Wärme gewandelt und desto höher ist der Wirkungsgrad. Der Kraftstoff wird so zudem schneller umgesetzt und Schadstoffemissionen gemindert. Zu große Kraftstofftröpfchen führen zu einer Belegung der katalytischen Schicht und damit zu einer nur langsamen Umsetzung. Dieses führt insbesondere in der Kaltstartphase beispielsweise zu einem schlechten Wirkungsgrad.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll, den Kraftstoff durch eine Dosiereinrichtung in feinverteilter Form und/oder gut platziert an Orte und Flächen zu verteilen, an denen die Kraftstoffe gut verdampfen können, beispielsweise in den Reaktionsraum oder die Vormischkammer eines Reformers oder katalytischen Brenners, die Innenflächen eines zylindrischen Brennraums oder die inneren Mantelflächen eines Katbrenners. Darüber hinaus ist es sinnvoll, die Geometrie des abgespritzten Kraftstoffes so wählen zu können, daß bestimmte Stellen bzw. Orte, an denen der Kraftstoff schlecht verdampfen kann, bzw. ungünstig auf das Betriebsverhalten, beispielsweise eines Reformers einwirkt, nicht unmittelbar mit dem eingespritzten Kraftstoff in Berührung kommen.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozess notwendig ist, in den Reaktionsbereich des Reformers. Durch die lange Zuführungsleitung kann die Zumeßeinrichtung von thermischen Einflüssen des Reformers isoliert werden.

Nachteilig bei den aus der obengenannten Druckschrift bekannten Vorrichtungen ist insbesondere, daß durch die einfache Konstruktion der Düse und die Anordnung der Prallbleche eine gezielte Eindosierung von Kraftstoff, beispielsweise in Bereiche des Reformers mit großem Wärmeangebot, nur unzureichend möglich ist. Dies führt zu einem relativ großen Raumbedarf durch die Notwendigkeit einer langen und voluminösen Verdampfungsstrecke.

Außerdem ergeben sich im Kaltstartbetrieb Probleme, da sich lange und voluminöse Verdampfungsstrecken nur langsam aufheizen und zudem relativ viel Wärme ungenutzt abgeben. Durch die in der US 3,971,847 offenbarten Anordnungen von Düse und Prallblechen ist es insbesondere nicht möglich, eine Hohlzylinderinnenfläche oder sphärische Ausnehmung gleichmäßig mit Kraftstoff zu benetzen oder dabei bestimmte Flächen des Hohlzylinders von der Benetzung mit Kraftstoff auszunehmen. Auch die Form der durch den Zumeßvorgang entstehenden Kraftstoffwolke kann nur unzureichend beeinflußt werden. Ähnliche Vorrichtungen sind auch aus WO 02/42635, WO2/059477, EP 1 186 774 und JP 1 014 1183 bekannt.

### Vorteile der Erfindung

Die erfindungsgemäße Dosiereinrichtung mit den kennzeichnenden Merkmalen des Hauptanspruchs hat demgegenüber den Vorteil, daß durch den sphärisch in den Zumeßraum ragenden Düsenkörper und einer geeigneten Anbringung der Abspritzöffnungen auf dem sphärisch in den Zumeßraum ragenden Düsenkörper die Geometrie des abgespritzten Kraftstoffes bzw. der Kraftstoffwolke den im Zumeßraum herrschenden Gegebenheiten und den dadurch gegebenen Bedingungen hervorragend angepaßt werden kann. Insbesondere ist es möglich, hohlzylindrische Innenflächen und sphärische Ausnehmungen gleichmäßig mit Kraftstoff zu benetzen.

Ferner ist es möglich, die Kraftstoffwolke so zu formen, daß eine Lücke in der Kraftstoffwolke geformt wird. Durch die Ausnehmung bestimmter Flächen von der Benetzung mit Kraftstoff bzw. Lücken in der Kraftstoffwolke ist es beispielsweise möglich, auf der Innenfläche des Zumeßraumes angebrachte Sensoren von einer Kraftstoffbeaufschlagung auszunehmen und deren Meßgenauigkeit zu verbessern.

Durch die in den Unteransprüchen aufgeführten Maßnahmen sind vorteilhafte Weiterbildungen der im Hauptanspruch angegebenen Dosiereinrichtung möglich.

In einer Weiterbildung der Erfindung ist der Düsenkörper an seinem der Zumeßleitung zugewandten Ende hohlzylindrisch geformt. Dies läßt eine besonders einfache und damit kostensparende Herstellung zu und ermöglicht überdies die Anbringung eines Gewindes in diesem Bereich, womit der Düsenkörper vorteilhaft besonders einfach, dichtend und beständig mit der Zumeßleitung verbunden werden kann.

Der Düsenkörper kann mit der Zuführungsleitung vorteilhafterweise auch verschweißt, insbesondere laserverschweißt, werden.

Gemäß einer weiteren Weiterbildung der erfindungsgemäßen Dosiereinrichtung, weisen die Abspritzöffnungen unterschiedliche Durchmesser auf. Dadurch kann insbesondere die durch die jeweilige Abspritzöffnung tretende Kraftstoffmenge bestimmt und den jeweiligen Anforderungen angepaßt werden.

Von Vorteil ist außerdem, die Mittelachsen der Abspritzöffnungen auf einen gemeinsamen Schnittpunkt zu legen, sowie den Schnittpunkt auf die Düsenkörperachse zu legen. Durch die Wahl der Stelle des Schnittpunkts auf der Düsenkörperachse kann die Geometrie der Kraftstoffwolke den jeweiligen Anforderungen angepaßt werden.

Überdies kann auch durch eine unsymmetrische Lageanordnung bzw. Mittelachsenneigung der Abspritzöffnungen zur Düsenkörperachse die Geometrie der Kraftstoffwolke bzw. die durch die austretenden Kraftstoffstrahlen gebildete Abstrahlgeometrie eingestellt und verbessert werden.

Durch die Reduzierung der Wandstärke des sphärischen Teils des Düsenkörpers auf eine Wandstärke, die geringer ist als die des übrigen Teils des Düsenkörpers, können die Abspritzgeometrie des Kraftstoffes und das Wärmeleitverhalten des Düsenkörpers positiv beeinflußt werden.

Vorteilhafterweise wird als Zumeßeinrichtung ein Brennstoffeinspritzventil eingesetzt, wie es z.B. für Hubkolbenmaschinen mit innerer Verbrennung benutzt wird. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Hublänge, gesteuert werden kann. Dabei ist die Abhängigkeit vom Pumpendruck weit weniger ausgeprägt, als bei Zumeßeinrichtungen, die über den Leitungsquerschnitt den Volumenstrom des Kraftstoffs steuern und der Dosierbereich ist deutlich größer.

Darüber hinaus sind die Brennstoffeinspritzventile vielfach bewährte, in ihrem Verhalten bekannte, kostengünstige, gegenüber den verwendeten Kraftstoffen chemisch stabile und zuverlässige Bauteile, wobei dies im besonderen für sog. Niederdruck-Brennstoffeinspritzventile zutrifft, die aufgrund der thermischen Entkopplung hier gut einsetzbar sind.

Die Zumeßleitung weist vorteilhafterweise eine Anzahl wandstärkereduzierter Stellen auf, die die Wärmeleitfähigkeit der Zumeßleitung herabsetzen bzw. auch als Kühlkörper dienen können.

Vorzugsweise weist die erfindungsgemäße Dosiereinrichtung im Düsenkörper einen Dralleinsatz mit einem Drallkanal zur Erzeugung eines Dralls im eingemessenen Kraftstoff bzw. Kraftstoff-Gas-Gemisch auf. Dadurch kann die Gemischaufbereitung und Zerstäubung des Kraftstoffes weiter verbessert werden.

Vorteilhaft ist es zudem, wenn die Form des Dralleinsatzes der Innengeometrie des Düsenkörpers gleicht und der Dralleinsatz mit einem Abstand zur Wandung des Düsenkörpers angeordnet ist. Dadurch läßt sich die Geschwindigkeit des Kraftstoffes bzw. des Kraftstoff-Gas-Gemisches am Dralleinsatz steigern und zudem gut einstellen. Dies verbessert die Gemischaufbereitung und Zerstäubung.

Vorzugsweise weist der Dralleinsatz mehrere Drallkanäle auf, wobei die mehreren Drallkanäle parallel verlaufen oder sich in ihrem Verlauf schneiden können. In dieser Weise kann die Drallerzeugung den Eigenschaften des Kraftstoffes bzw. des Kraftstoff-Gas-Gemisches leicht angepaßt werden und die Drallstärke den Anforderungen entsprechend angepaßt werden.

Vorteilhaft ist schließlich, die Dosiereinrichtung mit einer Luftzuführung auszuführen, mit welcher Luft oder ein anderes Gas in die Zumeßleitung eingebracht werden kann. Die Gemischaufbereitung kann damit weiter verbessert und die Kraftstofftröpfchengröße weiter reduziert werden. Außerdem kann so die Zumeßleitung, insbesondere in Stillstandsphasen und beispielsweise durch Ausblasen mit Luft durch die Luftzuführung, von Kraftstoff bzw. dem Kraftstoff-Gas-Gemisch befreit bzw. gereinigt werden. Ein unkontrollierter Austritt von Kraftstoff bzw. eines Kraftstoff-Gas-Gemisches aus der Zumeßleitung wird somit verhindert.

Durch den mehrteiligen Aufbau der Dosiereinrichtung ist eine kostengünstige Herstellung und der Einsatz von standardisierten Bauteilen möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines Ausführungsbeispiels einer erfindungsgemäßen Dosiereinrichtung;
- Fig. 2: die schematische Ansicht des Düsenkörpers von Fig. 1 von einem zwischen Adapterstück und Düsenköper liegenden Punkt der Düsenkörperachse;
- Fig. 3: eine schematischen Schnittdarstellung des in Fig. 2 dargestellten Düsenkörpers entlang der Linie III-III in einer Seitenansicht;
- Fig. 4: eine schematische Schnittdarstellung eines weiteren Ausführungsbeispiels eines erfindungsgemäßen Düsenkörpers in einer Seitenansicht,
- Fig. 5: die schematische Schnittdarstellung des Ausführungsbeispiels mit einem hohlzylindrischen Zumeßraum mit sphärischer Ausnehmung,
- Fig. 6: eine schematische Schnittdarstellung eines weiteren Ausführungsbeispiels eines erfindungsgemäßen Düsenkörpers mit einem Dralleinsatz und
- Fig. 7: eine schematische Darstellung eines Dralleinsatzes.

### Beschreibung des Ausführungsbeispiels

Nachfolgend wird ein Ausführungsbeispiel der Erfindung beispielhaft beschrieben.

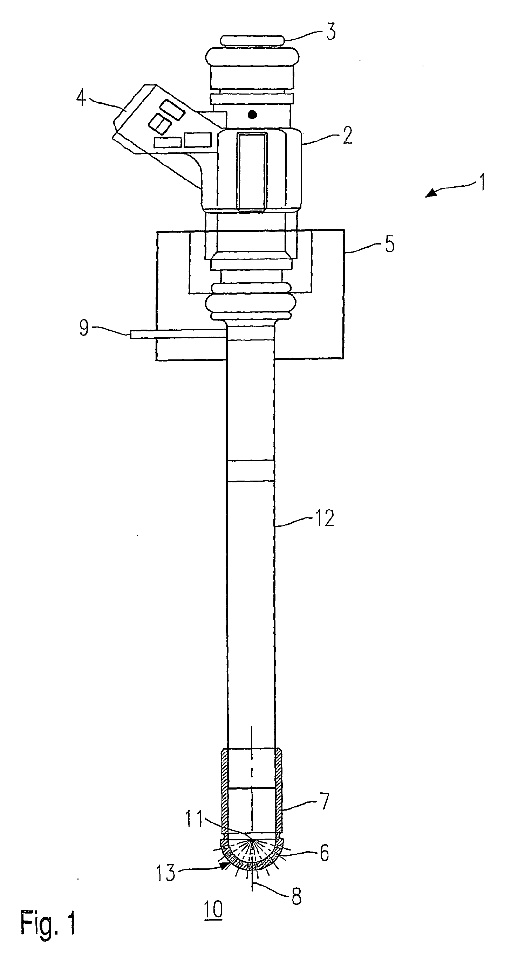

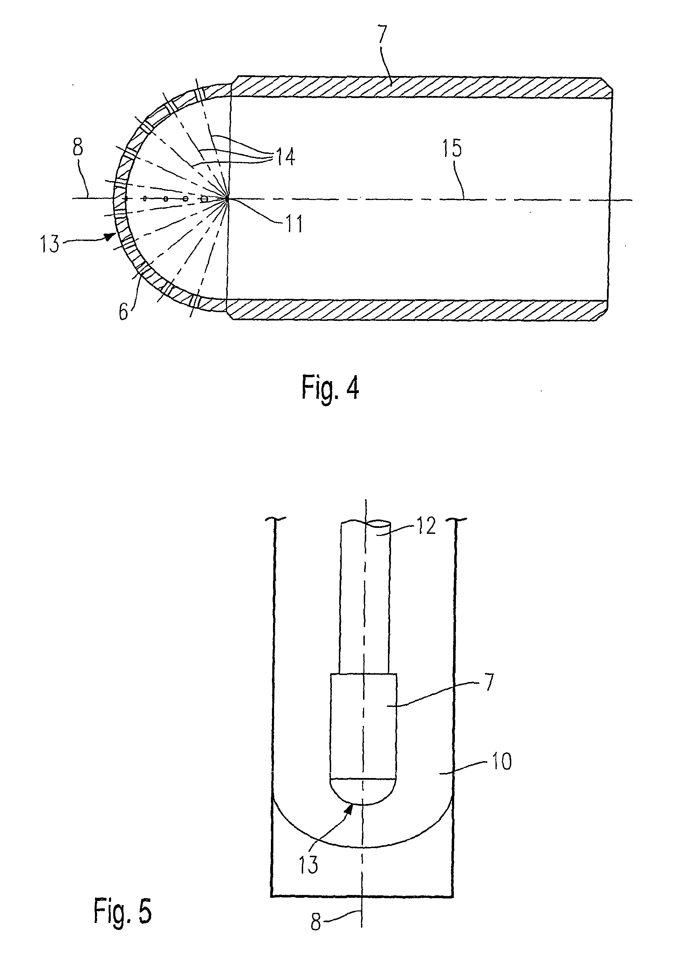

Ein in Fig. 1 dargestelltes Ausführungsbeispiel einer erfindungsgemäßen.Dosiereinrichtung 1 ist in der Form einer Dosiereinrichtung 1 für die Verwendung von Niederdruck-Brennstoffeinspritzventilen ausgeführt. Die Dosiereinrichtung 1 eignet sich insbesondere zum Eintrag und zur Zerstäubung von Kraftstoff in einen beispielhaft in Fig. 5 dargestellten Zumeßraum 10 eines nicht weiter dargestellten chemischen Reformers zur Gewinnung von Wasserstoff.

Die Dosiereinrichtung 1 besteht aus einer Zumeßeinrichtung 2, welche in diesem Ausführungsbeispiel als NiederdruckBrennstoffeinspritzventil ausgeführt ist, einem elektrischen Anschluß 4, einem Kraftstoffanschluß 3, einem Adapterstück 5 zur Aufnahme der Zumeßeinrichtung 2 und einer rohrförmigen Zumeßleitung 12, einer Luftzuführung 9 und einem Düsenkörper 7. Die Zumeßeinrichtung 2 ist rohrförmig, wobei sich der Kraftstoffanschluß 3 an der Oberseite befindet. An der Unterseite der Zumeßeinrichtung 2 erfolgt die Zumessung von Kraftstoff in die Zumeßleitung 12, wobei das Adapterstück 5 die Zumeßeinrichtung 2 und die Zumeßleitung 12 nach außen hydraulisch dicht miteinander verbindet. Die rohrförmige Luftzuführung 9 mündet in die Zumeßleitung 12 und ist mit ihr über eine Gewindeverbindung oder Schweißverbindung, insbesondere Laserschweißverbindung, dichtend verbunden.

Das der Zumeßleitung 12 zugewandte hohlzylindrisch geformte Ende des Düsenkörpers 7 umfaßt das entsprechende Ende der Zumeßleitung 12 und ist dort über eine Fügeverbindung, die eine Schweiß- oder Schraubverbindung, insbesondere eine durch Laserschweißen hergestellte Fügeverbindung sein kann, hydraulisch dicht mit der Zumeßleitung 12 verbunden. Alternativ dazu ist es auch möglich, daß das entsprechende Ende der Zumeßleitung 12 das ihm zugewandte hohlzylindrisch geformte Ende des Düsenkörpers 7 umfaßt. Die Zumeßleitung 12 selbst besteht beispielsweise aus einem standardisierten aus Edelstahl bestehenden Metallrohr.

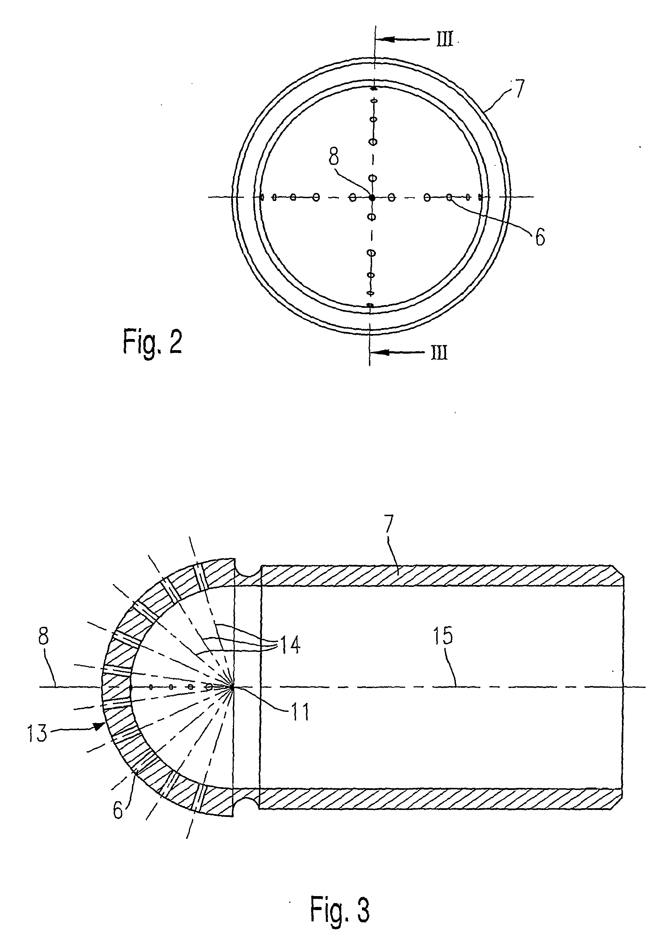

Der Düsenkörper 7 weist in seinem kugelsegmentförmig bzw. halbkugelförmig geformten abspritzseitigen sphärischen Teil 13 mehrere, in diesem Ausführungsbeispiel zwanzig, Abspritzöffnungen 6 auf, welche in Fig. 2 und Fig. 3 näher dargestellt sind. In dem hier dargestellten Ausführungsbeispiel sind alle Abspritzöffnungen 6 symmetrisch zu einer der Längsachse 15 des Düsenkörpers 7 entsprechenden Düsenkörperachse 8 angeordnet, wobei die gedachten Verlängerungen der Mittelachsen 14 der Abspritzöffnungen 6 durch einen auf der Düsenkörperachse 8 liegenden Schnittpunkt 11 verlaufen.

Der Zumeßeinrichtung 2 wird über den Kraftstoffanschluß 3 Kraftstoff, beispielsweise Benzin, Ethanol oder Methanol, von einer nicht dargestellten Kraftstoffpumpe und Kraftstoffleitung druckbehaftet zugeführt. Der Kraftstoff strömt bei Betrieb der Dosiereinrichtung 1 nach unten und wird durch den im unteren Ende der Zumeßeinrichtung 2 liegenden, nicht dargestellten Dichtsitz in bekannter Weise durch Öffnen und Schließen des Dichtsitzes in die Zumeßleitung 12 eingemessen. Durch die seitlich nahe der Zumeßeinrichtung 2 in die Zumeßleitung 12 mündende Luftzuführung 9 können zur Gemischaufbereitung Luft oder andere Gase, beispielsweise brennbare Restgase aus einem Reformierungs- oder Brennstoffzellenprozeß, zugeführt werden. Im weiteren Verlauf wird der Kraftstoff durch die Zumeßleitung 12 zum Düsenkörper 7 befördert und wird dort durch die Abspritzöffnungen 6 in den in Fig. 5 beispielhaft dargestellten Zumeßraum 10 eindosiert.

Fig. 2 zeigt den in Fig. 1 dargestellten Düsenkörpers 7 vergrößert von einem im Zumeßraum 10 liegenden Punkt der Düsenkörperachse 8. Die Einspritzöffnungen 6 liegen in dieser Ansicht auf zwei zueinander rechtwinkligen Linien, die sich auf der hier als Punkt dargestellten Düsenkörperachse 8 schneiden.

Fig. 3 zeigt die Schnittdarstellung des in Fig. 2 dargestellten Düsenkörpers 7 entlang der Linie III - III in einer Seitenansicht. Deutlich erkennbar schneiden in diesem Ausführungsbeispiel die Mittelachsen 14 der Abspritzöffnungen 6 den gemeinsamen auf der Düsenkörperachse 8 liegenden Schnittpunkt 11. Im sphärisch ausgeformten Teil 13 des Düsenkörpers 7, der in den beispielhaft in Fig. 4 dargestellten Zumeßraum 10 ragt, befinden sich in diesem Ausführungsbeispiel symmetrisch zur Düsenkörperachse 8 angeordnet zwanzig Abspritzöffnungen 6.

Fig. 4 zeigt ein weiteres Ausführungsbeispiel des in Fig. 2 dargestellten Düsenkörpers 7 in einer Seitenansicht ähnlich des in Fig. 3 dargestellten Ausführungsbeispiels. Die Wandstärke des sphärischen Teils 13 des Düsenkörpers 7 ist im Vergleich zur übrigen Wandstärke des Düsenkörpers 7 jedoch geringer.

Fig. 5 zeigt den an der Zuführungsleitung 12 befestigten, in den Zumeßraum 10 ragenden Düsenkörper 7. Der Zumeßraum 10 ist zylinderförmig, wobei das dargestellte Ende des Zumeßraumes 10 eine sphärische Ausnehmung aufweist. In diesen Bereich wird der Kraftstoff durch die in Fig. 4 nicht dargestellten Abspritzöffnungen 6 eindosiert. Vorteilhaft ist dabei, daß durch die abspritzseitige sphärische Formgebung des Düsenkörpers 7 die Abspritzöffnungen 6 so angeordnet sind, daß die sphärische Ausnehmung des Zumeßraumes 10 gleichmäßig mit Kraftstoff beaufschlagt wird.

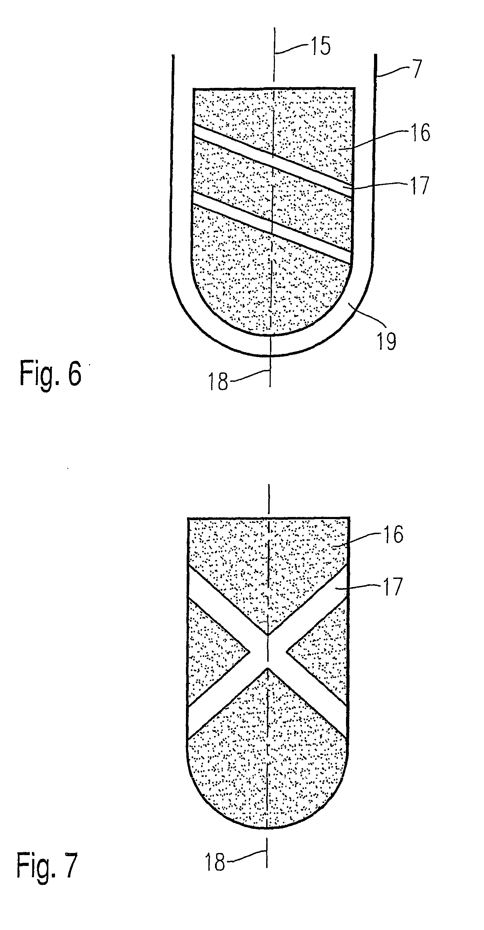

Fig. 6 zeigt eine schematische Schnittdarstellung eines weiteren Ausführungsbeispiels eines erfindungsgemäßen Düsenkörpers 7 mit einem im Inneren des Düsenkörpers 7 angeordneten Dralleinsatz 16. Die Wandung des Düsenkörpers 7 ist nur schematisch als Linie ohne die vorhandenen Abspritzöffnungen 6 gezeigt. Der Dralleinsatz 16 weist umfänglich verlaufende Drallkanäle 17 auf, welche gegen eine Dralleinsatzlängsachse 18 geneigt sind und so den vorbeiströmenden Kraftstoff bzw. das vorbeiströmende Kraftstoff-Gas-Gemisch in Drehung versetzen. In diesem Ausführungsbeispiel deckt sich die Dralleinsatzlängsachse 18 mit der Mittelachse 15 des Düsenkörpers 7.

Die Form des Dralleinsatzes 16 ist sowohl radial als auch zum sphärischen Teil 13 des Düsenkörpers 7 hin der inneren Form des Düsenkörpers 7 angepaßt. In diesem Ausführungsbeispiel ist der Dralleinsatz 16 mit einem gleichmäßigen Abstand 19, der hier beispielsweise weniger als 0,2 mm beträgt, an den radialen Seiten sowie am seinem sphärischem Teil vom Düsenkörpers 7 beabstandet. Durch den relativ kleinen Abstand 19 kommt es zu einer Druckerhöhung in den Drallkanälen 17 und somit zu einer besseren Aufbereitung.

Fig. 7 zeigt eine schematische Darstellung eines weiteren Dralleinsatzes 16, wobei die Drallkanäle 17 nicht wie im Ausführungsbeispiel in Fig. 6 parallel verlaufen sondern sich im umfänglichen Verlauf kreuzen.

## Patentansprüche

1. Dosiereinrichtung (1) für flüssige Kraftstoffe, insbesondere zum Eintrag in einen chemischen Reformer zur Gewinnung von Wasserstoff, mit zumindest einer Zumeßeinrichtung (2) zum Zumessen von Kraftstoff in eine Zumeßleitung (12) und mit einem sich an die Zumeßleitung (12) anschließenden Düsenkörper (7), der Abspritzöffnungen (6) aufweist, die in einen Zumeßraum (10) ausmünden,
**dadurch gekennzeichnet,**
**daß** der Düsenkörper (7) abspritzseitig mit einem sphärischen Teil (13) in den Zumeßraum (10) ragt und über den sphärischen Teil (13) des Düsenkörpers (7) die Abspritzöffnungen (6) verteilt sind.

2. Dosiereinrichtung nach Anspruch 1,
**dadurch gekennzeichnet,**
**daß** der Düsenkörper (7) an dem der Zumeßleitung (12) zugewandten Ende hohlzylinderförmig ist.

3. Dosiereinrichtung nach Anspruch 1 oder 2,
**dadurch gekennzeichnet,**
**daß** der Düsenkörper (7) mit der Zumeßleitung (12) dichtend verschraubt oder verschweißt, insbesondere laserverschweißt ist.

4. Dosiereinrichtung nach einem der Ansprüche 1 bis 3,
**dadurch gekennzeichnet,**
**daß** die Abspritzöffnungen (6) unterschiedliche Durchmesser aufweisen.

5. Dosiereinrichtung nach einem der Ansprüche 1 bis 4,
**dadurch gekennzeichnet,**
**daß** die Mittelachsen (14) der Abspritzöffnungen (6) einen gemeinsamen Schnittpunkt (11) haben.

6. Dosiereinrichtung nach Anspruch 5,
**dadurch gekennzeichnet,**
**daß** der gemeinsame Schnittpunkt (11) auf der Mittelachse (15) des Düsenkörpers (7) liegt.

7. Dosiereinrichtung nach einem der Ansprüche 1 bis 6,
**dadurch gekennzeichnet,**
**daß** die Lage der Abspritzöffnungen (6) unsymmetrisch zur Mittelachse (15) des Düsenkörpers (7) ist.

8. Dosiereinrichtung nach einem der Ansprüche 1 bis 7,
**dadurch gekennzeichnet,**
**daß** die Neigung der Mittelachsen (14) der Abspritzöffnungen (6) unsymmetrisch zur Mittelachse (15) des Düsenkörpers (7) ist.

9. Dosiereinrichtung nach einem der Ansprüche 1 bis 8,
**dadurch gekennzeichnet,**
**daß** die Wändstärke des sphärischen Teils (13) des Düsenkörpers (7) geringer ist als die des übrigen Teils des Düsenkörpers (7).

10. Dosiereinrichtung nach einem der Ansprüche 1 bis 9,
**dadurch gekennzeichnet,**
**daß** die Zumeßeinrichtung (2) ein Brennstoffeinspritzventil ist.

11. Dosiereinrichtung nach Anspruch 10,
**dadurch gekennzeichnet,**
**daß** das Brennstoffeinspritzventil ein Niederdruckbrennstoffeinspritzventil ist, welches mit Brenn- bzw. Kraftstoffdrücken von bis zu 10 bar arbeitet.

12. Dosiereinrichtung nach einem der Ansprüche 1 bis 11,
**dadurch gekennzeichnet,**
**daß** die Zumeßleitung (12) in ihrem axialen Verlauf zumindest eine wandstärkereduzierte Stelle oder einen wandstärkereduzierten Bereich aufweist.

13. Dosiereinrichtung nach einem der Ansprüche 1 bis 11,
**dadurch gekennzeichnet,**
**daß** der Düsenkörper (7) einen Dralleinsatz (16) mit einem Drallkanal (17) aufweist, wobei der Dralleinsatz (16) den Kraftstoff bzw. das Kraftstoff-Gas-Gemisch in eine kreisförmige Bewegung versetzt.

14. Dosiereinrichtung nach Anspruch 13,
**dadurch gekennzeichnet,**
**daß** die Form des Dralleinsatzes (16) der Innengeometrie des Düsenkörpers (7) weitgehend gleicht.

15. Dosiereinrichtung nach einem der Ansprüche 13 und 14,
**dadurch gekennzeichnet,**
**daß** der Dralleinsatz (16) im Düsenkörper (7) mit einem Abstand (19) zur Wandung des Düsenkörpers (7) angeordnet ist.

16. Dosiereinrichtung nach einem der Ansprüche 13 bis 15,
**dadurch gekennzeichnet,**
**daß** der Dralleinsatz (16) mehrere Drallkanäle (17) aufweist.

17. Dosiereinrichtung nach Anspruch 16,
**dadurch gekennzeichnet,**
**daß** die Drallkanäle (17) parallel verlaufen oder sich überkreuzen.

18. Dosiereinrichtung nach einem der vorangegangenen Ansprüche,
**dadurch gekennzeichnet,**
**daß** die Dosiereinrichtung (1) eine Luftzuführung (9) aufweist, mit der Luft oder ein anderes Gas in die Zumeßleitung (12) eingebracht werden kann.

## Claims

1. Dosing device (1) for liquid fuels, in particular for introducing into a chemical reformer for the recovery of hydrogen, having at least one metering device (2) for metering fuel into a metering line (12) and having a nozzle body (7) which adjoins the metering line (12) and has ejection openings (6) which open out into a metering space (10),
**characterized**
**in that** the nozzle body (7) projects at the ejection side with a spherical part (13) into the metering space (10), and the ejection openings (6) are distributed over the spherical part (13) of the nozzle body (7).

2. Dosing device according to Claim 1,
**characterized**
**in that** the nozzle body (7) is of hollow cylindrical shape at the end which faces towards the metering line (12).

3. Dosing device according to Claim 1 or 2,
**characterized**
**in that** the nozzle body (7) is sealingly screwed or welded, in particular laser-welded, to the metering line (12).

4. Dosing device according to one of Claims 1 to 3,
**characterized**
**in that** the ejection openings (6) have different diameters.

5. Dosing device according to one of Claims 1 to 4,
**characterized**
**in that** the central axes (14) of the ejection openings (6) have a common intersection point (11).

6. Dosing device according to Claim 5,
**characterized**
**in that** the common intersection point (11) is situated on the central axis (15) of the nozzle body (7).

7. Dosing device according to one of Claims 1 to 6,
**characterized**
**in that** the position of the ejection openings (6) is asymmetrical with respect to the central axis (15) of the nozzle body (7).

8. Dosing device according to one of Claims 1 to 7,
**characterized**
**in that** the inclination of the central axes (14) of the ejection openings (6) is asymmetrical with respect to the central axis (15) of the nozzle body (7).

9. Dosing device according to one of Claims 1 to 8,
**characterized**
**in that** the wall thickness of the spherical part (13) of the nozzle body (7) is lower than that of the remaining part of the nozzle body (7).

10. Dosing device according to one of Claims 1 to 9,
**characterized**
**in that** the metering device (2) is a fuel injection valve.

11. Dosing device according to Claim 10,
**characterized**
**in that** the fuel injection valve is a low-pressure fuel injection valve which operates with combustion pressures or fuel pressures of up to 10 bar.

12. Dosing device according to one of Claims 1 to 11,
**characterized**
**in that** the metering line (12) has, in its axial profile, at least one point of reduced wall thickness or a region of reduced wall thickness.

13. Dosing device according to one of Claims 1 to 11,
**characterized**
**in that** the nozzle body (7) has a swirl insert (16) with a swirl duct (17), with the swirl insert (16) imparting a circular motion to the fuel or the fuel/gas mixture.

14. Dosing device according to Claim 13,
**characterized**
**in that** the shape of the swirl insert (16) largely equates to the inner geometry of the nozzle body (7).

15. Dosing device according to one of Claims 13 and 14,
**characterized**
**in that** the swirl insert (16) is arranged in the nozzle body (7) with a spacing (19) to the wall of the nozzle body (7).

16. Dosing device according to one of Claims 13 to 15,
**characterized**
**in that** the swirl insert (16) has a plurality of swirl ducts (17).

17. Dosing device according to Claim 16,
**characterized**
**in that** the swirl ducts (17) run parallel or intersect one another.

18. Dosing device according to one of the preceding claims,
**characterized**
**in that** the dosing device (1) has an air supply (9), by means of which air or some other gas can be introduced into the metering line (12).

## Revendications

1. Installation de dosage (1) de carburants liquides notamment pour introduire un réformeur chimique donnant de l'hydrogène, ayant au moins une installation d'adjonction dosée (2) pour mesurer du carburant dans une conduite d'adjonction dosée (12) et un corps de buse (7) relié à la conduite d'adjonction (12) qui comporte des orifices d'éjection (6) débouchant dans un espace d'adjonction dosée (10),
**caractérisée en ce que**
le corps de buse (7) pénètre côté éjection, par une partie sphérique (13) dans un volume d'adjonction dosée (10) et les orifices d'éjection (6) sont répartis sur la partie sphérique (13) du corps de buse (7).

2. Installation de dosage selon la revendication 1,
**caractérisée en ce que**
le corps de buse (7) a une forme cylindrique creuse à son extrémité tournée vers la conduite d'adjonction dosée (12).

3. Installation de dosage selon les revendications 1 ou 2,
**caractérisée en ce que**
le corps de buse (7) est vissé ou soudé, notamment soudé par laser de façon étanche sur la conduite d'adjonction dosée (12).

4. Installation de dosage selon l'une des revendications 1 à 3,
**caractérisée en ce que**
les orifices d'éjection (6) ont des diamètres différents.

5. Installation de dosage selon l'une des revendications 1 à 4,
**caractérisée en ce que**
les axes (14) des orifices d'éjection (6) ont un point d'intersection commun (11).

6. Installation de dosage selon la revendication 5,
**caractérisée en ce que**
le point d'intersection commun (11) se situe sur l'axe (15) du corps de buse (7).

7. Installation de dosage selon les revendications 1 à 6,
**caractérisée en ce que**
la position des orifices d'éjection (6) est asymétrique par rapport à l'axe (15) du corps de buse (7).

8. Installation de dosage selon les revendications 1 à 7,
**caractérisée en ce que**
l'inclinaison des axes (14) des orifices d'éjection (6) est asymétrique par rapport à l'axe (15) du corps de buse (7).

9. Installation de dosage selon l'une des revendications 1 à 8,
**caractérisée en ce que**
l'épaisseur de paroi de la partie sphérique (13) du corps de buse (7) est inférieure à celle de la partie restante du corps de buse (7).

10. Installation de dosage selon l'une des revendications 1 à 9,
**caractérisée en ce que**
l'installation d'adjonction dosée (2) est un injecteur de carburant.

11. Installation de dosage selon la revendication 10,
**caractérisée en ce que**
l'injecteur de carburant est un injecteur de carburant basse pression fonctionnant avec des pressions combustibles ou carburants allant jusqu'à 10 bars.

12. Installation de dosage selon l'une des revendications 1 à 11,
**caractérisée en ce que**
l'installation d'adjonction dosée (12) a un tracé axial avec un point d'épaisseur de paroi réduite ou une zone d'épaisseur de paroi réduite.

13. Installation de dosage selon l'une des revendications 1 à 11,
**caractérisée en ce que**
le corps de buse (7) comporte un insert de mise en rotation (16) muni d'un canal de rotation (17), l'insert de mise en rotation (16) communiquant un mouvement circulaire au carburant ou au mélange carburant/ gaz.

14. Installation de dosage selon la revendication 13,
**caractérisée en ce que**
la forme de l'insert de rotation (16) est pratiquement identique à la géométrie intérieure du corps de buse (7).

15. Installation de dosage selon l'une des revendications 13 et 14,
**caractérisée en ce que**
l'insert de mise en rotation (16) est installé dans le corps de buse (7) à distance (19) de la paroi du corps de buse (7).

16. Installation de dosage selon l'une des revendications 13 à 15,
**caractérisée en ce que**
l'insert de mise en rotation (16) comporte plusieurs canaux de mise en rotation (17).

17. Installation de dosage selon la revendication 16,
**caractérisée en ce que**
les canaux de mise en rotation (17) sont parallèles ou croisent.

18. Installation de dosage selon l'une quelconque des revendications précédentes,
**caractérisée en ce que**
l'installation de dosage (1) comporte une alimentation en air (9) pour introduire de l'air ou un autre gaz dans la conduite d'adjonction dosée (12).
